# EUROPÄISCHE PATENTANMELDUNG

(11) **EP 2 116 119 A1**
(43) Veröffentlichungstag der Anmeldung: **11.11.2009**
(21) Anmeldenummer: 09005974.2
(22) Anmeldetag: 30.04.2009
(51) Int. Cl.: A01B 29/04

(54) **Ackerwalze**

(30) Priorität: 10.05.2008 DE 102008023233
(71) Anmelder: Amazonen-Werke H. Dreyer GmbH & Co. KG, 49205 Hasbergen (DE)
(72) Erfinder: Pokriefke, Michael, 27798 Hude (DE); Reinke, Wilfried, 26123 Oldenburg (DE); Tiessen, Reimer Uwe, 26135 Oldenburg (DE)

(57) **Zusammenfassung**

Ackerwalze mit abwechselnd angeordneten Arbeitsringen (4,17,20,23) und Glattringen (3), bei der die Glattringe (3) durch umlaufende und vorzugsweise im Querschnitt keilförmige Wülste (5) auf der Oberfläche von rohrförmigen Trägerelementen (2) gebildet werden und die Arbeitsringen (4,17,20,23) in Bezug auf die Glattringe (3) mit radialem und axialem Spiel und frei drehbar angeordnet sind und einen vom Außendurchmesser der Glattringe (3) verschiedenen Aussendruchmesser aufweisen, wobei den Arbeitsringen (4,17,20,23) seitliche Vorsprünge (9,19,25), die in zumindest seitlichen und unteren Kontur zumindest annähernd dem Profil von zwischen den jeweils benachbarten Wülsten (5) gebildeten Tälern (7) entsprechen. Um die bekannte Ackerwalze hinsichtlich der Reinigungswirkung der Vorsprünge der Arbeitsringe sowie das Krümeln der Bodens durch die Vorsprünge (9,19,25) der Ackerwalze in einfacher Weise zu verbessern, ist vorgesehen, dass die Vorsprünge (9,19,25) auf ihrer radialen Außenseite (10) einen in axialer Richtung über die Kontur der Täler (7) verlängerten und über den radialen Bereich (11) der Glattringe (3) hinausragenden Quersteg (12,22) aufweisen, dass der verlängerte Bereich des Quersteges mit seiner Innenseite sich oberhalb des radialen Außenbereiches (11) der Glattringe (3) befindet und mit ihr in reinigender Weise zusammenwirkt.

## Beschreibung

Die Erfindung betrifft eine Ackerwalze gemäß des Oberbegriffes des Patentanspruches 1.

Eine derartige Ackerwalze ist beispielsweise in der EP 16 14 334 B1 beschrieben. Derartige Ackerwalzen werden allgemein als Keilringwalzen bezeichnet. In den umlaufenden Tälern zwischen den die Keilringe bildenden Wülste der Erdringe ist ein ovaler Arbeitsring, an dem seitlich abstehende, die Kontur des Tales zwischen den Wülsten aufweisende Stege zur Reinigung der Ackerwalze angeordnet. Diese Vorsprünge liegen in den Bodenaufstandsbereich der Walze sowohl an den seitlichen Flanken der Wülste sowie dem Talboden zwischen den Wülsten an. Hierdurch kommt es durch die relativ spitz ausgebildeten Stege bei der Berührung des Talbodens zu einer relativ großen Flächenpressung. Dies kann zu Beschädigungen der aus Gummimaterial bestehenden Glattringe führen. Darüber hinaus ragen die äußeren Bereiche der Vorsprünge, wenn sie im Bodenbereich an dem Talboden anliegen, nicht über den Außenumfang der Glattringe hinaus. Die Vorsprünge tragen so nicht aktiv zu einer Krümelung des Bodens bei. Durch die vorbeschriebene direkte Auflage der Vorsprünge auf dem Talboden erfolgt eine relativ starke Punktpressung auf das Material, welches zu Zerstörung das Materiale der Glattringe führen kann.

Der Erfindung liegt die Aufgabe zugrunde, die bekannte Ackerwalze hinsichtlich der Reinigungswirkung der Vorsprünge der Arbeitsringe sowie das Krümeln des Bodens durch die Vorsprünge der Ackerwalze in einfacher Weise zu verbessern.

Diese Aufgabe wird erfindungsgemäß dadurch gelöst, dass die Vorsprünge auf ihrer radialen Außenseite einen in axialer Richtung über die Kontur der Täler verlängerten und über den radialen Bereich der Glattringe hinausragenden Quersteg aufweisen, dass der verlängerte Bereich des Quersteges mit seiner Innenseite sich oberhalb des radialen Außenbereiches der Glattringe befindet und mit ihr in reinigender Weise zusammenwirkt. Infolge dieser Maßnahmen wird die Voraussetzung dafür geschaffen, dass die Vorsprünge über eine größere Fläche auf den äußeren Bereichen der Glattringe im Außenbereich aufliegen und den Talboden des Tales zwischen den anderen benachbarten Wülsten nicht mit einem zu hohen Druck belasten oder ihn überhaupt nicht berühren.

Eine einfache Ausgestaltung der Vorsprünge, die es ermöglichen, dass die Vorsprünge auf den äußeren Bereich der Glattringe aufliegen können, lässt sich dadurch verwirklichen, dass die Vorsprünge T-förmig mit einem der Kontur der Täler zwischen benachbarten Tälern entsprechenden senkrechten Steg ausgebildet sind, dass an dem senkrechten Steg der Quersteg angeordnet ist.

Eine Einfache Ausgestaltung des Tragringes lässt sich dadurch verwirklichen, dass der Tragring sechseckförmig ausgebildet. Es ist jedoch auch möglich, dass der Tragring oval ausgebildet ist. Eine einfache Montage der Arbeitsringe auf der Ackerwalze lässt sich dadurch erreichen, dass der Tragring aus drei Segmenten mittels Verbindungselementen zusammengesetzt ist.

Eine schonende Auflage der Vorsprünge des Arbeitsringes auf die Wülste der Glattringe lässt sich dadurch verwirklichen, dass der Arbeitsring aus einem stabilen Werkstoff, wie beispielsweise Stahl besteht, und dass die Vorsprünge aus einem zumindest eine gewisse Elastizität aufweisenden Kunststoff- und/oder Gummimaterial bestehen.

Bei Arbeitsringen, die aus einem Tragring und den an dem Tragring angeordneten Vorsprüngen bestehen, lässt sich eine stabile Ausgestaltung des Tragringes und eine schonende Zusammenarbeit von Vorsprüngen und Wülsten der Glattringe dadurch verwirklichen, dass der Arbeitsring aus einem stabilen Werkstoff, wie beispielsweise Stahl besteht, und dass die Vorsprünge aus einem zumindest eine gewisse Elastizität aufweisenden Kunststoff- und/oder Gummimaterial bestehen.

In einer anderen Ausgestaltung ist bei Arbeitsringen aus einem Tragring und den an den Tragring angeordneten Vorsprüngen hinsichtlich eines stabil ausgestalteten Traggerüstes des Arbeitsringes und einer schonenden Zusammenarbeit von Vorsprüngen und den Wülsten der Glattringe vorgesehen, dass der Tragring und die Vorsprünge zumindest teilweise aus einem tragfähigem stabilen Werkstoff, wie beispielsweise Stahl bestehen, und dass die Vorsprünge aus einem zumindest eine gewisse Elastizität aufweisenden flexiblen Werkstoff, wie beispielsweise einem Kunststoff-oder Gummimaterial zumindest teilweise oder in ihrer Gesamtheit bestehen.

Um sicherzustellen, dass die Vorsprünge bei der Auflage der Walze auf der Bodenoberfläche mit ihrem inneren Bereich nicht den Talboden berühren, ist vorgesehen, dass der jeweilige senkrechte Steg der Vorsprünge in Verbindung mit dem T-förmigen Steg derart ausgebildet ist, dass der radial innere Bereich des senkrechten Steges beim dem Aufliegen des Quersteges des T-förmigen Steges auf der Oberfläche der Wülste der Glattringe beabstandet zu dem Talboden des jeweiligen Tales zwischen den benachbarten Wülsten ist.

Damit verhindert wird, dass die Vorsprünge den Talboden berühren, ist vorgesehen, dass beim Aufliegen des radial inneren Bereich des jeweiligen Quersteges des T-förmigen Steges auf der Oberfläche der Wülste der Glattringe ein Spalt zwischen dem Talboden des jeweiligen Tales zwischen den benachbarten Wülsten und dem radial inneren Bereich des senkrechten Steges vorhanden ist.

Weitere Einzelheiten der Erfindung sind der Beispielsbeschreibung und den Zeichnungen zu entnehmen. Hierbei zeigen
- Fig. 1: die als Keilringwalze ausgebildete Ackerwalze mit den Arbeitsringen in ausschnittsweiser und perspektivischer Darstellung,
- Fig. 2: die Ackerwalze mit den Arbeitsringen in ausschnittsweiser Darstellung und im Längsschnitt,
- Fig. 3: die Ackerwalze mit den Arbeitsringen in der Ansicht III/III,
- Fig. 4: die Ackerwalze in ausschnittsweiser Darstellung und im Längsschnitt, wobei die Situation der Anlage der Vorsprünge an den Glattringen bei dem Aufstand auf der Bodenoberfläche dargestellt ist,
- Fig. 5: den Arbeitsring in perspektivischer Darstellung,
- Fig. 6: den Arbeitsring in Seitenansicht,
- Fig. 7: einen oval ausgestalteten Arbeitring in perspektivischer Darstellung,
- Fig. 8: den Arbeitsring gemäß Fig. 7 in Seitenansicht,
- Fig. 9: einen Arbeitsring in perspektivischer Darstellung, wobei die Vorsprünge in ihrem äußeren Bereich mit einem flexiblen Gummimaterial beschichtet sind in perspektivischer Darstellung und
- Fig. 10: einen Arbeitsring in perspektivischer Darstellung, wobei die Vorsprünge in ihrer Gesamtheit aus einem flexiblen Gummimaterial bestehen in perspektivischer Darstellung.

Die Ackerwalze 1 besteht aus dem auf einem als Tragrohr 2 ausgebildeten rohrförmigen Trägerelement angeordneten Glattringen 3x. Diese Glattringe 3 weisen umlaufende und im Querschnitt keilförmige Wülze 5 auf, die auf der Oberfläche des Tragrohres 2 angeordnet sind. Das Tragrohr 2 ist über Lagerzapfen 6 in einem nicht dargestellten Tragrahmen drehbar angeordnet, über welchen die Ackerwalze 1 an Bodenbearbeitungsgeräte zur Krümmelung und Verfestigung des Bodens anzuordnen ist.

Die Glattringe 3 sind beabstandet zueinander angeordnet, hierbei wird zwischen den einander benachbarten Wülsten 5 ein umlaufendes Tal 7 gebildet.

Zwischen den Wülsten 5 der Glattringe 3 sind jeweils die Arbeitsringe 4 angeordnet. Diese Arbeitsringe 4 weisen einen Tragring 8 auf, an dem seitlich abstehende Vorsprünge 9 befestigt sind. Die Arbeitsringe 4 sind im Bezug auf die Glattringe 3 mit radialen und axialen Spiel- und frei drehbar angeordnet. Sie weisen einen vom Außendurchmesser der Glattringe 3 verschiedenen Durchmesser auf, wie die Zeichnung zeigen.

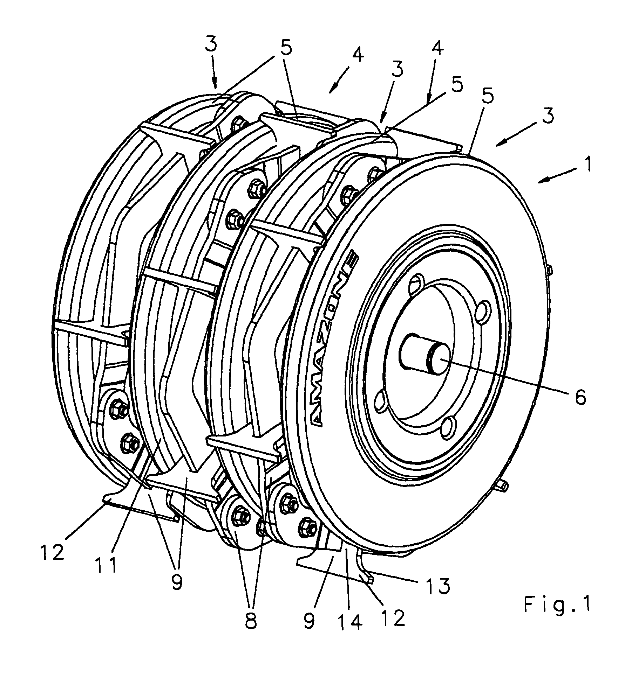

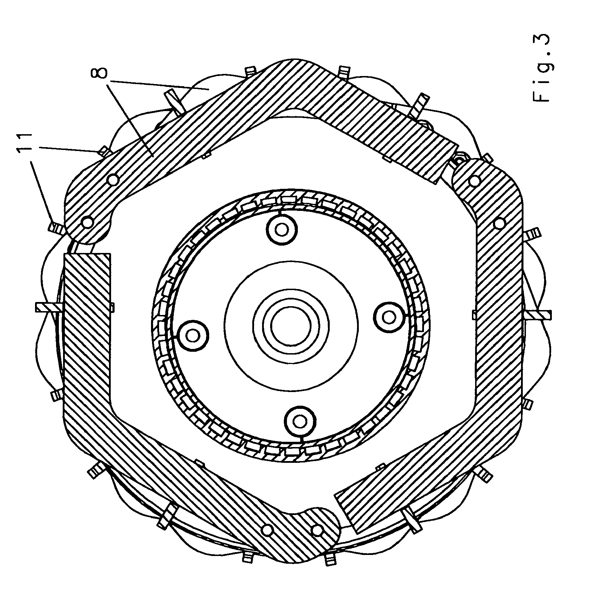

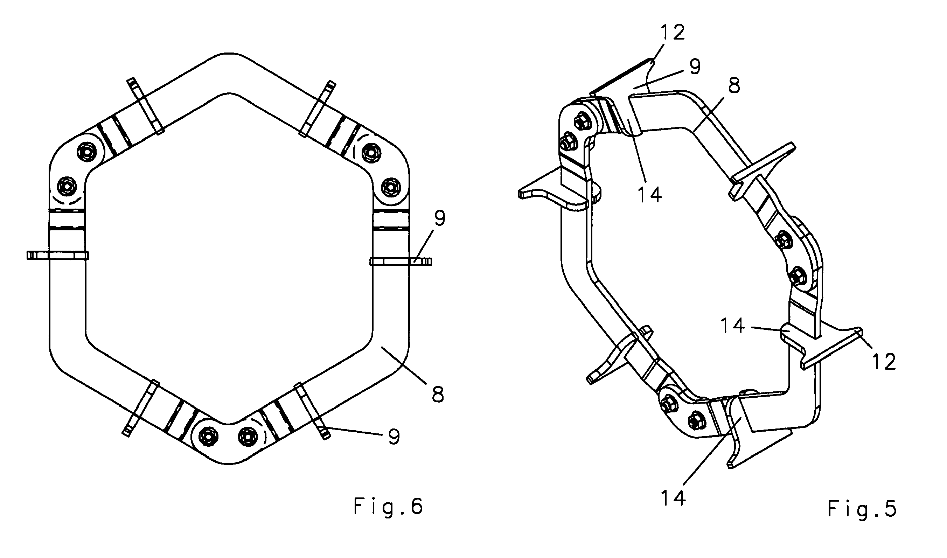

Der Tragring 8 der Arbeitsringe 4 gemäß den Fig. 1-6 ist sechseckförmig ausgebildet und besteht aus drei Segmenten, die mittels als Schrauben ausgebildeten Verbindungselementen zu einem Ganzen zusammengesetzt sind.

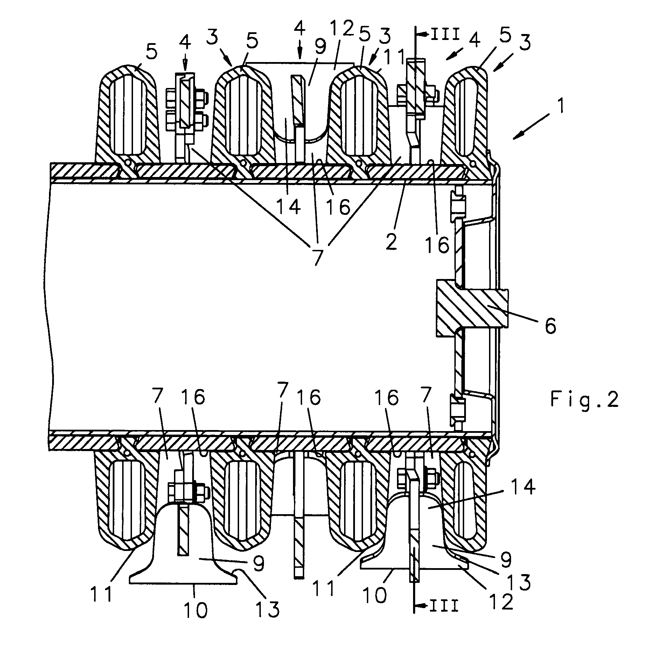

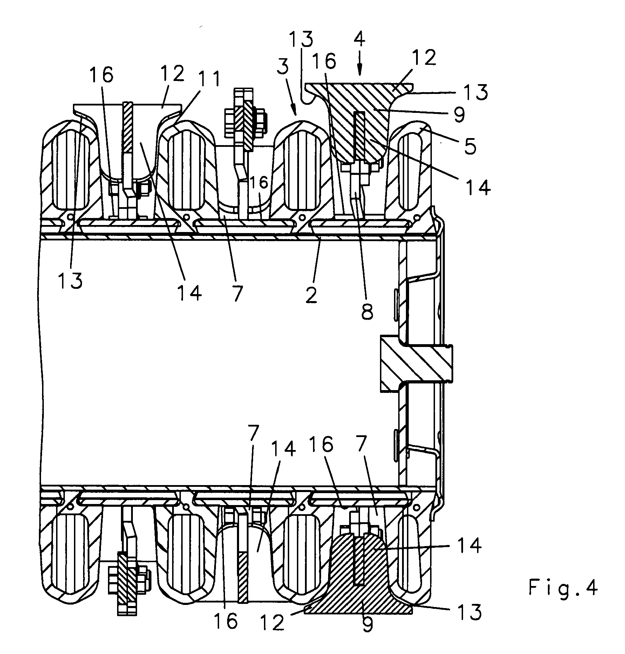

Die seitlichen Vorsprünge 9 entsprechen in ihrer seitlichen und unteren Kontur zumindest annähernd im Profil den von zwischen den jeweils benachbarten Wülsten 5 gebildeten Tälern 7, wie insbesondere die Fig. 4 zeigt. Die Vorsprünge 9 weisen auf ihrer radialen Außenseite 10 einen in axialer Richtung über die Kontur der Täler 7 verlängerten und über den radialen Außenbereich 11 der Wülste 5 hinausragenden Quersteg 12 auf. Der verlängerte Bereich des Quersteges 12 befindet sich mit seiner Innenseite 13 oberhalb des radialen Außenbereiches 11 des Glattringes 3 und wirkt mit ihn in reinigender Weise zusammen, wie die Fig. 2 und 4 zeigen. Die seitlichen Vorsprünge 9 sind T-förmig mit einem der Kontur der Täler 7 zwischen benachbarten Wülsten 5 entsprechenden senkrechten Steg 14 ausgebildet. An diesem senkrechten Steg 14 ist der vorerwähnte Quersteg 12 angeordnet. Hierbei ist der jeweilige senkrechte Steg 14 der Vorsprünge 9 in Verbindung mit dem T-förmigen Quersteg 12 derart ausgestaltet, dass der radial innere Bereich 15 des senkrechten Steges 14 beim aufliegen des Quersteges 12 des T-förmigen Steges 9 auf der Oberfläche 11 des Wülste 5 der Glattringe 3 beabstandet zu dem Talboden 16 des jeweiligen Tales 7 zwischen den benachbarten Wülsten 5 ist, wie insbesondere Fig. 4 zeigt. Bei dem Aufliegen des radialen inneren Bereiches 13 des jeweiligen Quersteges 12 des T-förmigen Steges 9, ist zu der Oberfläche 11 der Wülste 5 der Glattringe 3, wie Fig. 4 ebenfalls zeigt, ein Spalt zwischen dem Talboden 16 des jeweiligen Tales 7 zwischen den benachbarten Wülsten 5 und dem radial inneren Bereich des senkrechten Steges 14 vorhanden. Dieser Spalt kann entsprechend groß ausgebildet sein, wie die Fig. 4 zeigt. Der Querschnitt ist in seinen radial inneren Bereich an die Form der Wülste 5 angepasst und liegt auf dessen radialen Außenseiten auf, wenn die Bodenwalze 1 auf dem Boden aufsteht, wie Fig. 4 zeigt.

Im Ausführungsbeispiel gemäß den Fig. 1-6 sind sowohl der Tragring 8, wie auch die seitlichen Vorsprünge 9 aus Stahl hergestellt.

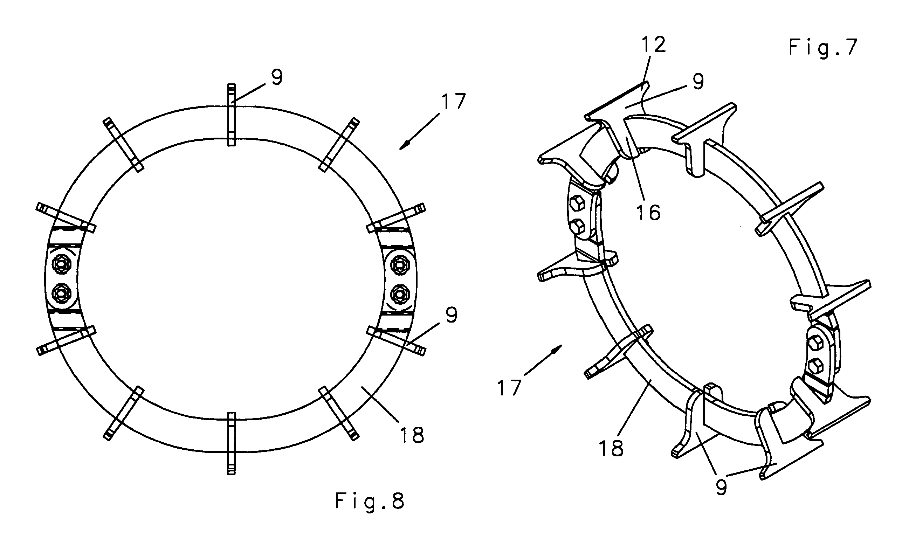

Der Arbeitsring 17 gemäß den Fig. 7 und 8 unterscheidet sich von dem Arbeitsring 4 gemäß den Fig. 1-6 dadurch, dass der Tragring 18 in seiner Form nicht sechseckig, sondern oval ausgestaltet ist. Die Vorsprünge 9 entsprechen den Vorsprüngen 9 gemäß dem Ausführungsbeispiel gemäß den Fig. 1-6.

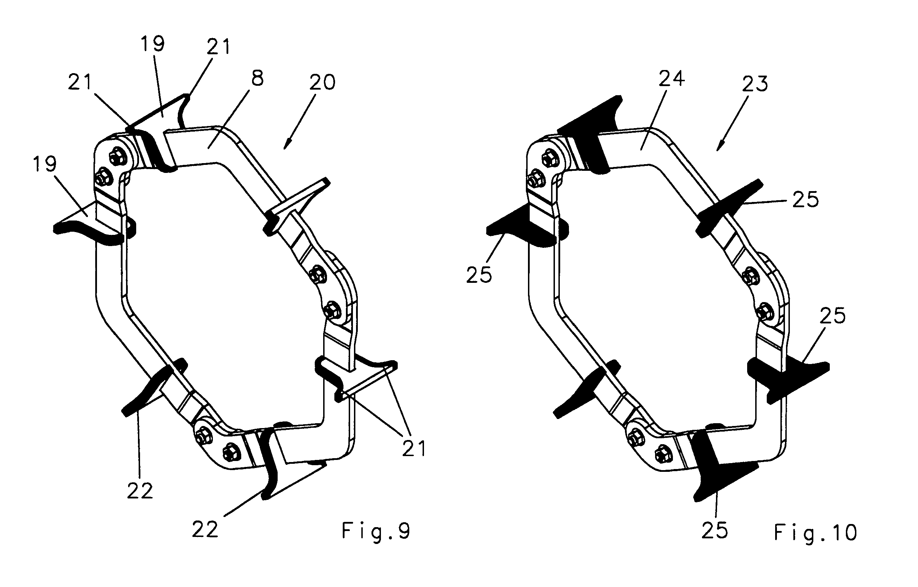

Wie die Fig. 9 zeigt, sind die den Wülsten 5 der Glattringe 3 benachbarten Seiten der Vorsprünge 19 der Arbeitsringe 20 mit einem Kunststoff- oder Gummimaterial 21, wie dies mit einem Netz gekennzeichneten Bereiche gezeigt ist, versehen. Hierdurch erfolgt eine weiche Belastung der Glattringe 3 beim Aufliegen der Querstege 22 der seitlichen Vorsprünge 19 in schonender Weise.

Wie die Fig. 10 zeigt, sind bei diesem Arbeitsring 23 der Tragring 24 aus einem stabilen Werkstoff, wie Stahl hergestellt, während die Vorsprünge 25 in ihrer Gesamtheit aus dem eine gewisse Elastizität aufweisenden Kunststoff- oder Gummimaterial, wie dies durch die mit einem Netz gekennzeichneten Vorsprünge 25 verdeutlichen, bestehen.

## Patentansprüche

1. Ackerwalze mit abwechselnd angeordneten Arbeitsringen und Glattringen, bei der die Glattringe durch umlaufende und vorzugsweise im Querschnitt keilförmige Wülste auf der Oberfläche von rohrförmigen Trägerelementen gebildet werden und die Arbeitsringen in Bezug auf die Glattringe mit radialem und axialem Spiel und frei drehbar angeordnet sind und einen vom Außendurchmesser der Glattringe verschiedenen Aussendruchmesser aufweisen, wobei den Arbeitsringen seitliche Vorsprünge, die in zumindest seitlichen und unteren Kontur zumindest annähernd dem Profil von zwischen den jeweils benachbarten Wülsten gebildeten Tälern entsprechen, **dadurch gekennzeichnet, dass** die Vorsprünge (9, 19, 25) auf ihrer radialen Außenseite einen in axialer Richtung über die Kontur der Täler (7) verlängerten und über den radialen Bereich (11) der Glattringe (3) hinausragenden Quersteg (12) aufweisen, dass der verlängerte Bereich des Quersteges (12) mit seiner Innenseite (13) sich oberhalb des radialen Außenbereiches (11) der Glattringe (5) befindet und mit ihr in reinigender Weise zusammenwirkt.

2. Ackerwalze nach Anspruch 1, **dadurch gekennzeichnet, dass** die Vorsprünge (9, 17, 25) T-förmig mit einem der Kontur der Täler (7) zwischen benachbarten Tälern (7) entsprechenden senkrechten Steg (14) ausgebildet sind, dass an dem senkrechten Steg (14) der Quersteg (12) angeordnet ist.

3. Ackerwalze nach Anspruch 1, wobei die Arbeitsringe jeweils aus einem Tragring und den an dem Tragring angeordneten Vorsprünge bestehen, **dadurch gekennzeichnet, dass** der Tragring (8) sechseckförmig ausgebildet.

4. Ackerwalze nach Anspruch 3, **dadurch gekennzeichnet, dass** der Tragring (8) aus drei Segmenten mittels Verbindungselementen zusammengesetzt ist.

5. Ackerwalze nach einem oder mehreren der vorstehenden Ansprüche, **dadurch gekennzeichnet, dass** der Arbeitsring aus mit einem Kunststoff- und/oder Gummimaterial ummantelten aus stabilen Werkstoff, wie Stahl hergestellten Traggerüst besteht.

6. Ackerwalze nach Anspruch 1, **dadurch gekennzeichnet, dass** zumindest die den Glattring (3) benachbarten Seiten der Vorsprünge (19) mit einem Kunststoff- und/oder Gummimaterial (20) versehen sind.

7. Ackerwalze nach Anspruch 1, wobei die Arbeitsringe aus einem Tragring und den an dem Tragring angeordneten Vorsprüngen bestehen, **dadurch gekennzeichnet, dass** der Tragring (24) des Arbeitsringes (23) aus einem stabilen Werkstoff, wie beispielsweise Stahl besteht, und dass die Vorsprünge (25) aus einem zumindest eine gewisse Elastizität aufweisenden Kunststoff- und/oder Gummimaterial bestehen.

8. Ackerwalze nach Anspruch 1, wobei die Arbeitsringe aus einem Tragring und den an den Tragring angeordneten Vorsprüngen besteht, **dadurch gekennzeichnet, dass** der Tragring und die Vorsprünge (19) zumindest teilweise aus einem tragfähigem stabilen Werkstoff, wie beispielsweise Stahl bestehen, und dass die Vorsprünge (19) aus einem zumindest eine gewisse Elastizität aufweisenden flexiblen Werkstoff, wie beispielsweise einem Kunststoff- oder Gummimaterial (21) zumindest teilweise oder in ihrer Gesamtheit bestehen.

9. Ackerwalze nach einem oder mehreren der vorstehenden Ansprüche, **dadurch gekennzeichnet, dass** der jeweilige senkrechte Steg (10) der Vorsprünge (9, 19, 25) in Verbindung mit dem T-förmigen Steg (12) derart ausgebildet ist, dass der radial innere Bereich des senkrechten Steges (10) beim dem Aufliegen des Quersteges (12) des T-förmigen Steges auf der Oberfläche der Wülste (5) der Glattringe (3) beabstandet zu dem Talboden (16) des jeweiligen Tales (7) zwischen den benachbarten Wülsten ist.

10. Ackerwalze nach einem oder mehreren der vorstehenden Ansprüche, **dadurch gekennzeichnet, dass** beim Aufliegen des radial inneren Bereich des jeweiligen Quersteges (12) des T-förmigen Steges auf der Oberfläche der Wülste (5) der Glattringe (3) ein Spalt zwischen dem Talboden (16) des jeweiligen Tales (7) zwischen den benachbarten Wülsten (5) und dem radial inneren Bereich des senkrechten Steges (10) vorhanden ist.
